# EUROPEAN PATENT APPLICATION

(11) **EP 2 735 236 A1**
(43) Date of publication of application: **28.05.2014**
(21) Application number: 12007875.3
(22) Date of filing: 22.11.2012
(51) Int. Cl.: A23L 2/02, A23L 2/385, C12G 3/02, A23L 2/38

(54) **Fermentation of juice**

(71) Applicant: Rudolf Wild GmbH & Co. KG, 69214 Eppelheim (DE)
(72) Inventor: Keller, Christine, 68723 Schwetzingen (DE); Döhr, Marcel, 67354 Römerberg (DE); de With, Axel, 68723 Plankstedt (DE); Donhowe, Erik, Hebron, KY 41048 (US); Sass, Matthias, 68723 Oftersheim (DE); Chatard, Dominique, 69121 Heidelberg (DE)
(74) Representative: Grünecker, Kinkeldey, Stockmair & Schwanhäusser

(57) **Abstract**

The present invention relates to a process of preparing a concentrated liquid foodstuff comprising treating a mixture of a juice concentrate having a Brix of from 5 to 20 °Bx and a carbohydrate, with a yeast; to obtain a concentrated liquid foodstuff, wherein the alcohol content is lower than 15 g/kg of concentrated liquid foodstuff.

## Description

The present invention relates to a process of preparing a concentrated liquid foodstuff with low alcohol content.

The fermentation of sugar into alcohol in the presence of yeast for the preparation of alcoholic beverages is known since a very long time. Already in the middle age people prepared alcoholic drinks, such as wine, by fermentation of grape juice. For such fermentation, yeasts are used. Overall, sugars, such as glucose, fructose and sucrose are converted into cellular energy and thereby produce ethanol and carbon dioxide as metabolic byproducts. Since this conversion is performed in the absence of oxygen, ethanol fermentation is classified as anaerobic.

However, the beverages produced in that manner contain considerable amounts of alcohol. Since alcoholic drinks are not suitable for different groups of people, fermented beverages not containing alcohol are of interest.

US 4,695,468 describes a process for producing carbonated beverages comprising the fermentation of a sugar solution containing a liquid flavor extract and having a ph of 3.5 or lower in the presence of a yeast and continuing fermentation until the ph level drops to 3.0 or lower. However, to obtain satisfactory fermentation, it is required to add a yeast nutrient.

IT 1264292 describes a non-alcoholic drink comprising a fermented mixture of plants substances. In the process described therein a diluted fruit juice is used for fermentation.

JP 2001-190251 describes the fermentation of fruit juices, wherein the content of fruit juice is from 0.01 to 75 wt%. However, said document also uses only diluted fruit juices and is silent about the fermentation of concentrated fruit juices.

Furthermore, it is quite common in the USA to ferment lemon. Fermented lemon juice is called "Skeeter Pee" (http://skeeterpee.com). However, Skeeter Pee is an alcoholic beverage containing from about 5 to 10% of alcohol. Furthermore, as described in the Skeeter Pee recipe, lemon juice is diluted with water and then fermented. In order to obtain sufficient fermentation, yeast nutrients and the yeast energizers are added.

It is an object of the present invention to provide a process for the preparation of a concentrated liquid foodstuff with a good taste and flavor and having a low alcohol content.

Said object is solved by a process of preparing a concentrated liquid foodstuff comprising treating a mixture of a juice concentrate having a Brix of from 5 to 20 °Bx and a carbohydrate, with a yeast; to obtain a concentrated foodstuff, wherein the alcohol content is lower than 15 g/kg of concentrated liquid foodstuff.

The present invention further provides a concentrated liquid foodstuff obtainable by the above-mentioned process, a ready-to-drink composition comprising the concentrated liquid foodstuff and a diluent, and the use of the concentrated liquid foodstuff for the preparation of a ready-to-drink composition.

Further embodiments are set forth in the subclaims 2 to 12.

### Description of the figures

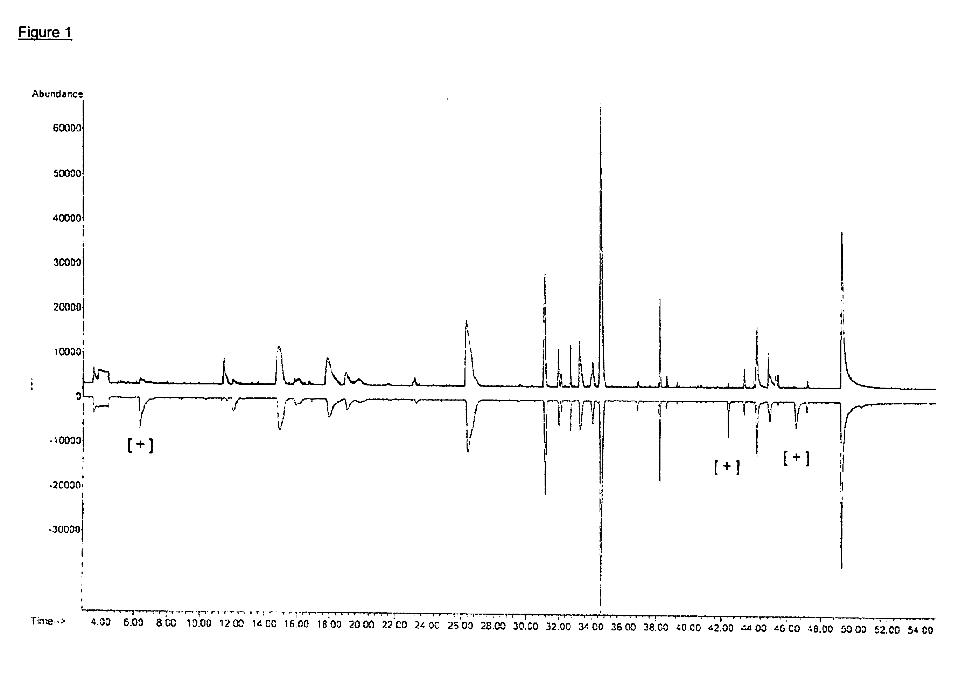

Figure 1 shows a GC MS of the starting material (upper curve) and of the fermented product (lower curve). GC MS was recorded with Agilent GC-System 6890N incl. 5975 MSD, Gerstel MPS2 autosampler; Column: INNOWAX 60m (0.25 mm i.D, thickness 0.25 µm); Carrier gas: Helium; Methode: SPME Headspace-Extraction, subsequent GC/MS.

The term "concentrated liquid foodstuff' refers to a liquid foodstuff, which is concentrated.

The term "°Bx" (degrees Brix) refers to a unit representing the soluble solid content in a solution. One degree Brix corresponds to 1 gram of saccharose in 100 grams of saccharose/water solution and thus represents the concentration of the solution as a percentage by weight (% w/w). A solution has 1 °Bx if the density of said solution is the same as a solution of 1 gram of saccharose in 100 grams of saccharose/water solution. The °Bx is usually measured by means of a refractometer.

The term "juice concentrate" refers to a concentrate obtainablele by selective removal of water from juice, preferably until the amount of water remaining in the concentrate is from 20 to 80 % by weight based on the juice concentrate. The juice is obtained from fruits, berries, vegetables, herbs, nuts, spices, fungi, cereals, or crop products by pressing, squeezing, or extracting. The term "extracting" is used representatively for an extraction with a solvent, such as maceration or percolation. The production of juice concentrates is a common practice and well-known by the person skilled in the art. It can be carried out by any process resulting in a higher Brix value of the juice after the process. Examples for common concentration methods are filtration and evaporation. The terms "juice concentrate" also refers to water extracted soluble solids, comminutes and purees.

Suitable fruits are, for example apple, passion fruit, pear, peach, plum, apricot, nectarine, grape, cherry, lemon, lime, mandarin, tangerine, orange, grapefruit, tomato, cucumber, pineapple, pomegranate, kiwi, mango, papaya, banana, watermelon, cantaloupe, acerola, blood orange, carob, cherimoya, citrus, dragonfruit, fig, guave, honeydew melon, kaki, lychee, mangosteen, melon, mirabelle, olive, paprika, physalis, prickly pear, pumpkin, quince, starfruit and mixtures thereof.

Suitable berries are, for example, cranberry, currant, raspberry, gooseberry, blackberry, blueberry, strawberry, acai, aronia berry, black currant, boysenberry, elderberry, goji, lingonberry, mulberry, red and black currant, rosehip, rowan berry, sea buckthorn, sloe, whitethorn and wood berries and mixtures thereof.

Suitable vegetables are, for example, potato, lettuce, celery, spinach, cabbage, watercress, rhubarb, carrot, beet, asparagus, beetroot, broccoli, endive, fennel, horseradish, leek, onion, pea and spinach and mixtures thereof.

Suitable herbs are, for example, dandelion, aloe vera, fennel, ginkgo, green tee, hibiscus, mallow, rooibos, leaves and tea and mixtures thereof.

Suitable nuts are, for example, coconut, chestnut, almond, cashew, hazelnut, macadamia, peanut, pecan, pine nut, pistachio, walnut and mixtures thereof.

Suitable spices are, for example, cinnamon, ginger, liquorice and vanilla and mixtures thereof.

Suitable cereals are, for example, barley, flaxseed, bran, maize, millet, oat, rice, rye, wheat, corn and malt and mixtures thereof.

Suitable crop products are, for example, beans, cacao, cassia, coffee, ginseng, guarana, honey, lenses, lotus, poppy seed, sunflower, soy, and tamarind and mixtures thereof.

The juice concentrate used in the process according to the present invention may be any juice concentrate obtained from fruits, berries, vegetables, herbs, nuts, spices, fungi, cereals, or crop products mentioned above.

In a preferred embodiment in combination with any of the embodiments described above or below, the juice concentrate is selected from citrus fruits, such as lemon, lime, mandarin, tangerine, orange, grapefruit, blood orange or mixtures thereof. More preferably, the juice concentrate is selected from lemon, lime, or mixtures thereof. In particular, the juice concentrate is selected from lime.

The juice concentrate has a Brix of from 5 to 20 °Bx. In a preferred embodiment in combination with any of the embodiments described above or below, the juice concentrate used in the process according to the present invention has a Brix of from 6 to 16 °Bx. More preferably, the juice concentrate has a Brix of from 8 to 12 °Bx.

Lime juice with a juice content of 100 wt%, obtained from concentrate, has a Brix of 8 °Bx. A juice concentrate having a Brix of 12 °Bx corresponds to a juice content of 150 wt%.

Concentrations below 5 °Bx cause the formation of undesired off-flavoured compounds. Higher concentrations above 20 °Bx also cause the formation of undesired off-flavoured compounds and furthermore inhibit the fermentation process.

In a preferred embodiment in combination with any of the embodiments described above or below, the juice concentrate has a low pH, such as <4, preferably <3, more preferably <2.5. In particular, the juice concentrates is selected from lime juice or lemon juice, especially lime juice.

Common yeasts, which are used for the fermentation of food products and beverages are Ascomycota. Preferably, alcohol-forming yeasts are used, e.g. yeasts of the genus Saccharomyces, Kloeckera, and Pichia. Examples of such yeasts are Saccharomyces cerevisiae, Saccharomyces bayanus, and Kloeckera apiculata.

In another preferred embodiment in combination with any of the embodiments described above or below, dry yeast is used.

In a further preferred embodiment in combination with any of the embodiments described above or below, the yeast is selected from Saccharomyces, more preferably Saccharomyces cerevisiae or Saccharomyces bayanus, in particular Saccharomyces cerevisiae.

In another preferred embodiment in combination with any of the embodiments described above or below, the yeast is added at an amount of 0.01 to 0.1 wt%, based on the total weight of the mixture, more preferably in an amount of 0.015 to 0.07 wt%, in particular 0.02 wt%.

Yeast can be further characterized by its CFU. The term "CFU" refers to colony-forming unit and is an estimate of viable bacterial and fungal numbers and is usually iven in CFU/mL or CFU/g.

In a further preferred embodiment in combination with any of the embodiments described above or below, the mixture comprises a dry yeast having a CFU of 1 x 10¹⁰ CFU/kg. The yeast is preferably present in an amount of 1 x 10⁹ CFU/kg to 1 x 10¹⁰ CFU/kg, more preferably in an amount of 1.5 x 10⁹ CFU/kg to 7 x 10⁹ CFU/kg, in particular 2 x 10⁹ CFU/kg. The density of the mixture (fermentate) of the present invention is approximately 1 g/mL. Thus, 2 x 10⁹ CFU/kg corresponds to 2 x 10⁹ CFU/L and 2 x 10⁶ CFU/mL.

If the amount of yeast is in this range, the desired aromatic compounds are formed without the formation of off-flavored compounds.

In another preferred embodiment in combination with any of the embodiments described above or below, the treatment of the juice concentrate with the yeast in the process according to the present invention is carried out at temperatures above 25 °C, more preferably at a temperature of from 25 to 35 °C, in particular at a temperature of from 28 to 32 °C.

In a further preferred embodiment in combination with any of the embodiments described above or below, the treatment in the process according to the present invention is carried out for 24 to 50 hours.

In another preferred embodiment in combination with any of the embodiments described above or below, the fermentation is carried out at a pH of < 2.5 and at a temperature of 28 to 32 °C for 24 to 50 h.

Preferably, the fermentation is stopped when the desired aromatic compounds have been formed and the alcohol content is low.

In a further preferred embodiment in combination with any of the embodiments described above or below, the reaction batch is not agitated and not aerated during fermentation. More preferably, oxygen is excluded in the process of the present invention to avoid oxidation.

In a further preferred embodiment in combination with any of the embodiments described above or below, the fermentation is stopped by heat treatment at a temperature of 80 to 90 °C for 30 to 60 seconds, when the desired aromatic compounds have been formed and the alcohol content is low. The solids can be removed from the concentrated liquid foodstuff by common procedures known to the person skilled in the art, e.g. by filtration.

Yeasts, such as Saccharomyces cerevisiae, ferment carbohydrates, preferably hexoses. In many juice concentrates, in particular in citrus fruits, hexoses are present only in small amounts. An addition of carbohydrates, preferably hexoses, may therefore helpful for starting the fermentation.

Suitable carbohydrates include maltose, lactose, glucose, saccharose, fructose, hydrolyzed saccharose concentrate, invert sugar syrup, glucose syrup, natural fruit sugar from fruit juice, fruit juice concentrate (e.g. Fruit-up®, apple juice concentrate, grape juice concentrate), honey, maple syrup, and pale malt. In a preferred embodiment in combination with any of the embodiments described above or below, the carbohydrate is selected from glucose, lactose, saccharose, and fructose of which glucose is most preferable.

In a preferred embodiment in combination with any of the embodiments described above or below, the carbohydrate is not or only slightly colored and does not have a taste of its own. Sugar syrups, such as invert sugar syrup and glucose syrup are preferred, since the hexoses therein are free and therefore easily available. Furthermore, said syrups do not influence the color and do not have a distinguished taste.

In another preferred embodiment in combination with any of the embodiments described above or below, the carbohydrate is added in an amount of from 1 to 20 wt%, based on the total weight of the mixture, more preferably in an amount of from 2 to 10 wt%, in particular from 3 to 5 wt%.

In a further preferred embodiment in combination with any of the embodiments described above or below, the yeast is added in activated form. For the activation, the yeast is suspended in degassed water having a temperature of from 30 to 40 °C in an amount to obtain a suspension with 5 wt% of yeast (≙ 5 x 10⁸ CFU/mL). The suspension is allowed to stand for 10 to 20 min at 30 to 40 °C and is afterwards stirred vigorously for approximately 15 min in order to completely dissolve the yeast and to obtain an aeration of the suspension.

In a further preferred embodiment in combination with any of the embodiments described above or below, the above-described activated yeast suspension is added to the juice concentrate and carbohydrate. Preferably, the starting concentration is in the range of 0.1 to 0.3 g of dry yeast per 1 L of reaction batch, i.e. 1 to 3 x 10⁶ CFU/mL of reaction batch.

In a further preferred embodiment in combination with any of the embodiments described above or below, the reaction batch is pasteurized before fermentation.

In another preferred embodiment in combination with any of the embodiments described above or below, the solids are removed after fermentation, e.g. by filtration or centrifugation. The removal of the solids increases the sensory stability of the resulting foodstuff.

It is well-known that during fermentation with yeasts esters and other aromatic components are formed. The amounts of the so-formed compounds depend on the yeast and the fermentation conditions.

In the present invention, the fermentation process is carried out under the described conditions in order to form the desired aromatic compounds. The fermentation conditions are therefore modified to obtain a foodstuff having the desired taste and a low amount of alcohol. In particular, the fermentation conditions do not fall under the usual optimum conditions of the yeast. For instance, the optimum fermentation temperature for Saccharomyces cerevisiae (SIHA 3) for conversion of sugar into alcohol is in the range of 15 to 22 °C, whereas in a preferred embodiment of the present invention the fermentation temperature is above 25 °C, more preferably in the range of 28 to 32 °C.

Similarly, in another preferred embodiment in combination with any of the embodiments described above or below, the fermentation is carried out at a pH < 4, in particular pH <2.5. The pH optimum of Saccharomyces cerevisiae is usually in the range of pH 5 to 6.

In a preferred embodiment in combination with any of the embodiments described above or below, the alcohol content of the concentrated liquid foodstuff is lower than 10 g/kg.

When preparing a concentrated liquid foodstuff according to the process of the present invention, the formation of alcohol is inhibited and the formation of the desired aromatic compound is maximized.

In another preferred embodiment in combination with any of the embodiments described above or below, the ready-to-drink composition contains less than 1.5 g of alcohol per 1 L of ready-to-drink composition.

The ready-to-drink composition may, in a preferred embodiment in combination with any of the embodiments described above or below, be carbonated.

In a further preferred embodiment in combination with any of the embodiments described above or below, the diluent in the ready-to-drink composition is water. More preferably, the diluent is carbonated water.

In another preferred embodiment in combination with any of the embodiments described above or below, the ready-to-drink composition may comprise sweetening agents, more preferably natural sweetening agents, fruit juice concentrate (e.g. Fruit-up®, apple juice concentrate, grape juice concentrate), and Stevia.

In a further preferred embodiment in combination with any of the embodiments described above or below, the ready-to-drink composition contains 40 g/L of Fruit-up®, 0.2 g/L of Stevia, 75 g/L of the concentrated liquid foodstuff of the present invention and carbonated or non-carbonated water.

The following examples describes specific embodiments of the present invention,

### Examples

### Example 1:

### Fermentation of lime juice

To 930 g of lime juice concentrate (having a Brix of 50 °Bx) diluted with water to 8.6 °Bx 70 g of invert sugar syrup having a Brix of 71.5 °Bx is added to obtain 1 L of a mixture having 8 °Bx of the juice concentrate and 5 °Bx of the invert sugar syrup, i.e. the total Brix is 13 °Bx.

To 2.5 g of Saccharomcyes cerevisiae degassed water having a temperature of 34 °C is added to obtain a suspension with a concentration of 5 wt% of yeast (5 x 10⁸ CFU/mL). The suspension is allowed to stand for 15 min at 34 °C and is afterwards vigorously stirred for additional 15 min to activate the yeast. To the mixture of lime juice and sugar the activated yeast is added in an amount of 4 g/kg. The fermentation is carried out at 30 °C for 48 h in the absence of oxygen. The fermentation is stopped by heating the mixture to 85 °C for 40 seconds. The solids are removed by filtration (Pall Seitz k100 Filter Sheets, Fine Particle Retention 1-4 µm).

The resulting fermented product has an alcohol content of 10 to 15 g/kg and a Brix of 11.5 °Bx.

The fermented product is diluted with carbonated water and crystal sugar is added. The resulting beverage contained 7.5 wt% of the fermented product and 9 wt% of crystal sugar, based on the total weight of the beverage. The alcohol content of the beverage is therefore 0.75 to 1.125 g/L.

### Reference Example:

A reference drink is formed by mixing carbonated water, crystal sugar and the non-fermented lime concentrate having 8 °Bx of the juice concentrate and 5 °Bx of invert sugar syrup in the same manner as described in Example 1. The resulting drink contained 7.5 wt% of the non-fermented product and 9 wt% of crystal sugar, based on the total weight of the beverage.

In a Forced Choice Test with 10 test persons the beverage and the reference drink was presented to the test persons. The beverage of Example 1 was preferred by all test persons.

## Claims

1. A process of preparing a concentrated liquid foodstuff comprising
treating a mixture of a juice concentrate having a Brix of from 5 to 20 °Bx and a carbohydrate, with a yeast;
to obtain a concentrated liquid foodstuff, wherein the alcohol content is lower than 15 g/kg of concentrated liquid foodstuff.

2. The process according to claim 1, **characterized in that** the juice concentrate has a Brix of from 6 to 16 °Bx.

3. The process according to claim 1 or 2, **characterized in that** the juice concentrate has a Brix of from 8 to 12 °Bx.

4. The process according to any of claims 1 to 3, **characterized in that** the yeast is selected from Saccharomyces, preferably Saccharomyces cerevisiae or Saccharomyces bayanus.

5. The process according to any of claims 1 to 4, **characterized in that** the treatment of the juice concentrate with the yeast is carried out at temperatures above 25 °C.

6. The process according to claim 5, **characterized in that** the treatment of the juice concentrate with the yeast is carried out at temperatures of from 25 to 35 °C.

7. The process according to claim 5 or 6, **characterized in that** the treatment of the juice concentrate with the yeast is carried out at temperatures of from 28 to 32 °C.

8. The process according to any of claims 1 to 7, **characterized in that** the treatment is carried out for 24 to 50 h.

9. The process according to any of claims 1 to 8, **characterized in that** the juice concentrate has a pH of < 4.

10. The process according to any of claims 1 to 9, **characterized in that** the yeast is added in an amount of 0.01 to 0.1 wt%, based on the total weight of the mixture.

11. The process according to any of claims 1 to 10, **characterized in that** the carbohydrate is added in amount of from 1 to 20 wt%, based on the total weight of the mixture.

12. The process according to claim 11, **characterized in that** the carbohydrate is selected from the group consisting of maltose, lactose, glucose, hexose, a hydrolyzed saccharose concentrate, an invert sugar syrup, a glucose syrup, a natural fruit sugar from fruit juice and fruit juice concentrate.

13. A concentrated liquid foodstuff obtainable by the process according to any of claims 1 to 12.

14. A ready-to-drink composition comprising a diluent and the concentrated liquid foodstuff according to claim 13.

15. Use of the concentrated liquid foodstuff obtained by the process of any of claims 1 to 12 for the preparation of a ready-to-drink composition.
